(19) Europäisches Patentamt
European Patent Office
Office européen des brevets

(11) **EP 3 261 223 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **17175729.7**

(22) Anmeldetag: **13.06.2017**

(51) Internationale Patentklassifikation (IPC):
**H02K 1/27** (2022.01)   **H02K 7/00** (2006.01)
**H02K 15/03** (2006.01)

(52) Gemeinsame Patentklassifikation (CPC):
**H02K 15/03; H02K 1/2726; H02K 1/2733; H02K 1/274; H02K 1/2753; H02K 1/278; H02K 7/003**

(54) **ELEKTRISCHE MASCHINE UND VERFAHREN ZUR HERSTELLUNG DER ELEKTRISCHEN MASCHINE**

ELECTRICAL MACHINE AND METHOD FOR MANUFACTURING AN ELECTRICAL MACHINE

MACHINE ÉLECTRIQUE ET PROCÉDÉ DE FABRICATION D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2016 DE 102016211246**

(43) Veröffentlichungstag der Anmeldung:
**27.12.2017 Patentblatt 2017/52**

(73) Patentinhaber: **Robert Bosch GmbH**
**70442 Stuttgart (DE)**

(72) Erfinder:
• **Derhardt, Steffen**
**70839 Gerlingen (DE)**
• **Paweletz, Anton**
**70736 Fellbach (DE)**

(56) Entgegenhaltungen:
**EP-A1- 1 223 662        WO-A1-2007/072536**
**WO-A1-2010/098046       JP-A- S60 141 151**
**US-A1- 2015 167 470     US-A1- 2016 049 845**

**Beschreibung**

Die Erfindung betrifft eine elektrische Maschine mit einem Rotor sowie ein Herstellungsverfahren zum Herstellen der elektrischen Maschine mit dem Rotor.

Stand der Technik

Rotoren von Hochgeschwindigkeitsmaschinen beinhalten in der Regel hoch energetische Seltene-Erden Permanentmagnete. Solche Hochgeschwindigkeitsmaschinen werden typischerweise in einem Drehzahlbereich von mehr als hunderttausend Umdrehungen pro Minute angewendet.

Aus der US 4,433 261 A ist eine Synchronmaschine vom Permanentmagnettyp mit einem Rotor bekannt. Auf einer Rotorwelle sind dabei Seitenplatten aus einem nicht-magnetischen Material, wie Edelstahl, in einem derartigen Abstand durch Schweißen befestigt, dass säulenförmige Permanentmagnete derart dazwischen eingesetzt werden können, dass eine Verschiebung der Permanentmagnete in Umfangsrichtung verhindert wird. Die Magnete werden mit der Oberfläche der Welle und den Seitenplatten verklebt. Des Weiteren wird ein Harz in den Zwischenraum zwischen den Magneten eingespritzt. Anschließend wird der Außenumfang der so montierten Magnete mit Glasfasern oder Kohlefasern umwickelt.

Weiterhin ist aus der WO 2010/098046 A1 eine elektrische Maschine mit einer zweigeteilten Welle und einem zwischen den beiden Wellenteilen angeordnetem Rotor bekannt.

Offenbarung der Erfindung

Die Erfindung offenbart eine elektrische Maschine mit den Merkmalen des Patentanspruchs 1.

Demgemäß ist eine elektrische Maschine vorgesehen, aufweisend die Merkmale des Anspruchs 1.

Des Weiteren wird ein nicht zur Erfindung gehörendes Verfahren zur Herstellung einer elektrischen Maschine vorgestellt, wobei das Verfahren die Schritte aufweist:
Bereitstellen einer zweigeteilten Welle mit einem ersten und zweiten Wellenteil, Bereitstellen eines Rotors, wobei der Rotor eine Magnetelement-Aufnahme aufweist; Bereitstellen wenigstens eines Magnetelements, wobei das Magnetelement mit wenigstens einem nach außen hervortretenden spitzen oder stumpfen Ende ausgebildet ist zur Aufnahme in einer dazu korrespondierenden Aufnahme der elektrischen Maschine; und Einfügen des wenigstens einen Magnetelements in die Magnetelement-Aufnahme und Aufnahme und Verbinden des Rotors mit der zweigeteilten Welle.

Vorteile der Erfindung

Die vorliegende Erfindung schafft eine elektrische Maschine, bei welcher die durch das wenigstens eine Magnetelement erzeugten Fliehkräfte beim Drehen der Welle geeignet abfangen werden können. Durch das Vorsehen beider Enden des Magnetelements mit nach außen zeigenden oder nach außen hervortretenden spitzen oder stumpfen Enden und der jeweiligen Aufnahme der Enden in einer Aufnahme mit einer dazu korrespondierenden Vertiefung, kann die Fliehkraft des Magnetelements, welche in radialer Richtung nach außen auf die Magnetelement-Aufnahme des Rotors wirkt, mit einer Kraftkomponente in axialer Richtung $F_{ax}$ und einer Kraftkomponente $F_{rad}$ in radialer Richtung entgegen der Fliehkraft erzeugt werden. Dadurch können im Betrieb auftretende Fliehkräfte teilweise kompensiert werden bzw. diesen Fliehkräften entgegengewirkt werden.

Bevorzugte Weiterbildungen sind Gegenstand der Unteransprüche.

In einer erfindungsgemäßen Ausführungsform ist eine Hülse vorgesehen, welche die Magnetelement-Aufnahme aufweist. Die Hülse wird dabei zwischen den beiden Wellenteilen angeordnet und des Weiteren an den beiden inneren Enden der Wellenteile befestigt, beispielsweise durch Verpressen oder Aufschrumpfen usw.. Die Hülse bildet dabei mit ihrem Innenumfang die Magnetelement-Aufnahme. Dabei kann die Hülse außerdem mit einer zusätzlichen Aussparung, z.B. einer Nut, als Magnetelement-Aufnahme oder außerdem einer zusätzlichen Stufe ausgebildet sein, welche als Anschlag für das wenigstens eine Magnetelement in der Magnetelement-Aufnahme der Hülse dient.

Des Weiteren kann - nicht zur Erfindung gehörend -

eines der Wellenteile an seinem inneren Ende die Magnetelement-Aufnahme aufweisen und mit dem anderen Wellenteil zusammensteckbar ausgebildet ist. Das Wellenteil weist - nicht zur Erfindung gehörend - eine sich von dem inneren Ende in Längsrichtung erstreckende Vertiefung auf, deren Innenumfang die Magnetelement-Aufnahme bildet. Der Innenumfang der Vertiefung des Wellenteils kann - nicht zur Erfindung gehörend - ebenfalls mit einer zusätzlichen Aussparung, z.B. einer Nut usw., als Magnetelement-Aufnahme ausgebildet sein. Auf diese Weise kann - nicht zur Erfindung gehörend - auf eine zusätzliche Hülse verzichtet und stattdessen eines der Wellenteile selbst als Magnetelement-Aufnahme dienen.

Die Aufnahmen der elektrischen Maschine zum Aufnehmen des jeweiligen Endes des Magnetelements mit seinen nach außen hervortretenden spitzen oder stumpfen Enden sind als Vertiefungen in einer zwischen dem jeweiligen Wellenteil und dem wenigstens einen Magnetelement angeordneten Trägerplatte ausgebildet. Indem die Trägerplatte neben dem Wellenteil ebenfalls die Aufnahme für das Ende des Magnetelements bilden kann, kann auch die Trägerplatte zum Reduzieren der Fliehkräfte des Magnetelements eingesetzt werden.

Die Vertiefung der Trägerplatte kann dabei als eine konische, kegelförmige oder kegelstumpfförmige Vertiefung ausgebildet sein zum Aufnehmen eines z.B. kegelförmigen oder kegelstumpfförmigen Endes. Eine derartige Vertiefung ist einfach und kostengünstig in der Herstellung.

Die Trägerplatte ist auf der dem Wellenteil gegenüberliegenden Seite nach außen konisch zulaufend ausgebildet und das Wellenteil weist eine dazu korrespondierend geformte Vertiefung zur Aufnahme der Trägerplatte auf.

Zwischen wenigstens einem der Wellenteile und einer zugeordneten Trägerplatte ist in einer Ausführungsform der Erfindung ein elastisches Ausgleichselement vorgesehen. Dadurch können Toleranzen zwischen der Trägerplatte und dem Magnetelement ausgeglichen und auftretende Kräfte in axialer Richtung aufgenommen werden. Da eine Trägerplatte an wenigstens einem Ende des Magnetelements in der Magnetelement-Aufnahme vorgesehen ist, kann das elastische Ausgleichselement auch zwischen dem Innenumfang der Magnetelement-Aufnahme und dem Außenumfang der Trägerplatte vorgesehen werden.

Das wenigstens eine Magnetelement kann in einer Ausführungsform der Erfindung stabförmig oder stangenförmig ausgebildet sein und als eine derart segmentierte Magnetelement-Anordnung sowohl in der Vertiefung des Wellenteils als auch am Innenumfang der Hülse sowie in einer zusätzlichen am Innenumfang der Hülse vorgesehenen Aussparung, z.B. Nut, oder an einer am Innenumfang der Hülse vorgesehenen Stufe usw. angeordnet werden. Ebenso kann das Magnetelement in einer weiteren Ausführungsform der Erfindung auch hülsenförmig oder scheibenförmig ausgebildet sein und in die Vertiefung des Wellenteils oder in die Hülse eingeschoben werden. Des Weiteren kann eine zusätzliche scheibenförmige Trägerplatte in einer Ausführungsform der Erfindung ebenfalls in die Vertiefung des Wellenteils oder in die Hülse eingeschoben werden. Die Trägerplatte kann in einer anderen Ausführungsform der Erfindung auch segmentiert ausgebildet sein, so dass sie in die zusätzliche Aussparung, z.B. Nut, der Hülse oder Wellenteils eingesetzt werden kann.

Erfindungsgemäss ist eine Verbindungsstange durch ein durch ein Wellenteil und den Rotor mit seinem wenigstens einen Magnetelement vollständig hindurchgeführt und in das andere Wellenteil teilweise eingeführt und an diesem befestigt, z.B. formschlüssig und/oder kraftschlüssig befestigt. Dadurch können die beiden Wellenteile miteinander verbunden und über ein Spannelement in axialer Richtung gegeneinander verspannt werden.

Alternativ ist erfindungsgemäss die Verbindungsstange durch beide Wellenteile und den Rotor mit seinem wenigstens einen Magnetelement vollständig hindurchgeführt Die beiden Wellenteile und der Rotor können hierbei in axialer Richtung miteinander verspannt werden z.B. durch Spannelemente. Beide Wellenteile können dabei auf der Verbindungsstange einen Schiebesitz bilden.

In einer Ausführungsform der Erfindung kann die dem Ende des Magnetelements oder der Trägerplatte gegenüberliegende Seitenwand der Aussparung, z.B. Nut, oder der dem Ende des Magnetelements oder der Trägerplatte gegenüberliegende Boden der Vertiefung gerade verlaufen oder alternativ korrespondierend zu der Neigung des Endes des Magnetelements bzw. der Trägerplatte geneigt verlaufen. Ein gerader Verlauf des Bodens oder der Aussparung, z.B. Nut, hat den Vorteil, dass der Boden bzw. die Aussparung einfach und kostengünstig in der Herstellung ist.

Kurze Beschreibung der Zeichnungen

Weitere Merkmale und Vorteile der vorliegenden Erfindung werden nachfolgend anhand der Figuren erläutert. Es zeigen:

Fig. 1 eine schematische Schnittansicht einer elektrischen Maschine gemäß einer ersten erfindungsgemäßen Ausführungsform;

Fig. 2 eine schematische Schnittansicht einer elektrischen Maschine, welche das Verständnis der Erfindung erleichtert;

Fig. 3 eine schematische Schnittansicht einer elektrischen Maschine gemäß einer zweiten erfindungsgemäßen Ausführungsform;

Fig. 4 eine schematische Schnittansicht einer elektrischen Maschine gemäß einem Beispiel, welches das Verständnis der Erfindung erleichtert ("Beispiel" im Folgenden)

Fig. 5a eine schematische Seitenansicht durch ein Ausführungsbeispiel eines Magnetelements der erfindungsgemäßen elektrischen Maschine;

Fig. 5b eine schematische Schnittansicht des Magnetelements gemäß Fig. 5a;

Fig. 6a eine schematische Seitenansicht durch ein Ausführungsbeispiel zweier Magnetelemente der erfindungsgemäßen elektrischen Maschine;

Fig. 6b eine schematische Schnittansicht der Magnetelemente gemäß Fig. 6a;

Fig. 7 ein Flussdiagramm zur Herstellung der elektrischen Maschine gemäß der Fig. 1, 2, 3 und 4.

Ausführungsformen der Erfindung

Die vorliegende Erfindung betrifft die Struktur und die Konstruktion eines Rotorsystems einer elektrischen Maschine, insbesondere Hochgeschwindigkeitsmaschine, die in einem variablen Betriebszyklus betrieben werden kann und hohen Temperaturschwankungen ausgesetzt sein kann. Die Rotoren solcher elektrischer Maschinen beinhalten in der Regel hoch energetische Permanentmagnete aus seltenen Erden.

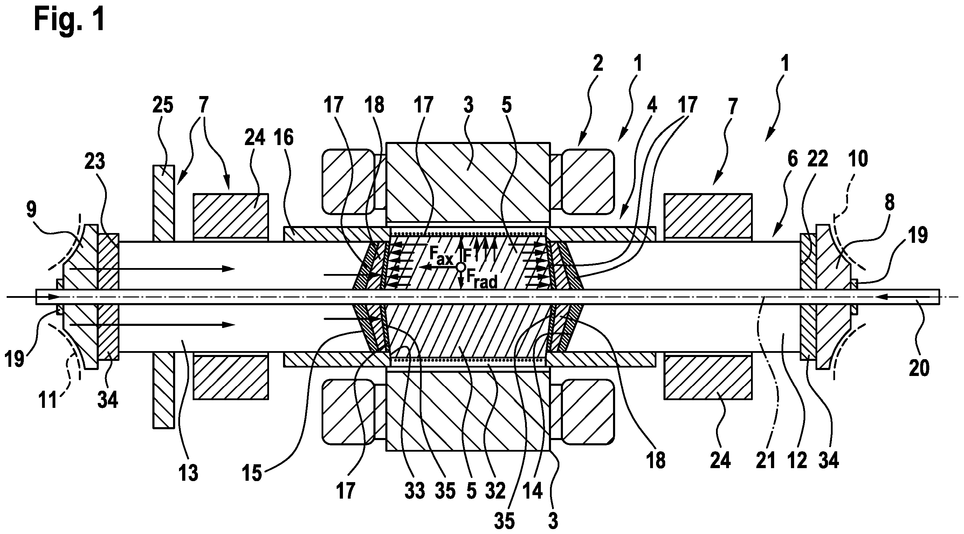

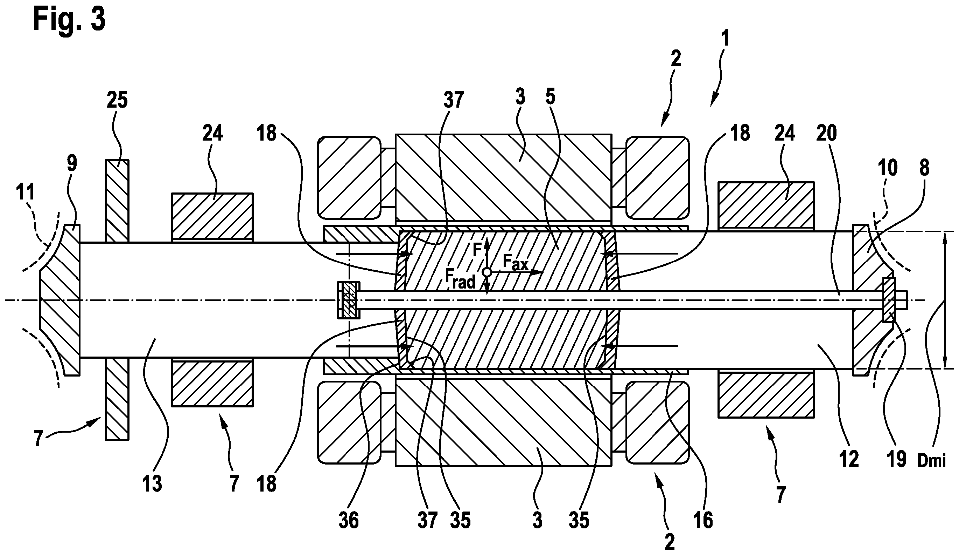

In Fig. 1 und der nachfolgenden Fig. 3 ist eine Grundanordnung einer elektrischen Maschine 1, z.B. einer Hochgeschwindigkeitsmaschine, mit einem Rotorsystem gemäß der Erfindung gezeigt, welches im Nachfolgenden noch erläutert wird.

Das erfindungsgemäße und im Folgenden noch näher beschriebene Rotorsystem weist eine zweigeteilte Welle 6 mit einem ersten Wellenteil 12 und einem zweiten Wellenteil 13 sowie wenigstens ein oder mehrere Magnetelemente 5 auf, wobei beide Enden des jeweiligen Magnetelements 5 hierbei statt flach oder eben als ein nach außen zeigendes spitzes oder stumpfes Ende ausgebildet sind.

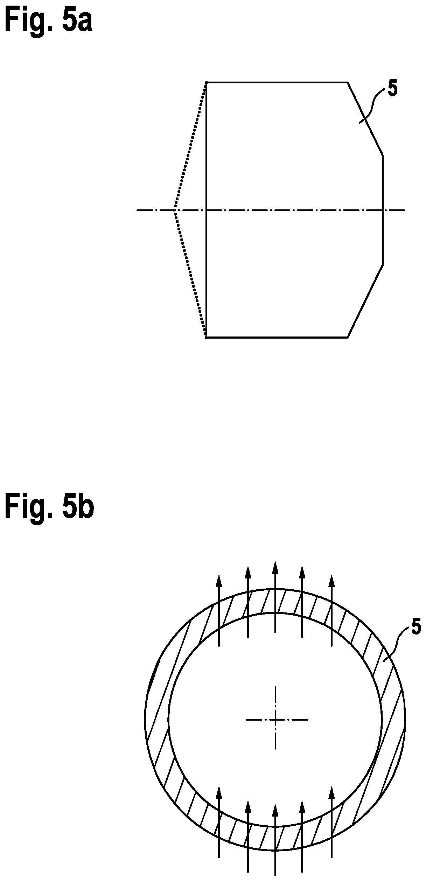

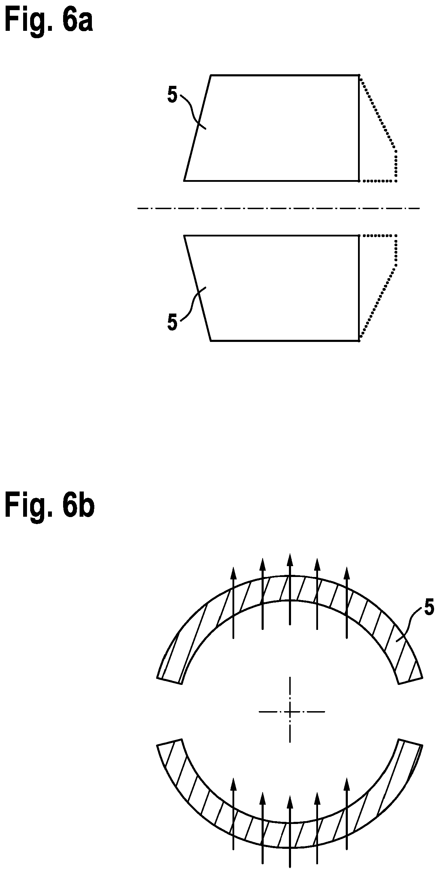

Dieses nach außen zeigende spitze oder stumpfe Ende kann bei einem hülsen- oder scheibenförmigen Magnetelement z.B. konvex, konisch, insbesondere kegelförmig oder kegelstumpfförmig usw., wie in den nachfolgenden Fig. 5a und 5b beispielhaft gezeigt, ausgebildet sein oder im Falle einer segmentierten Bauweise können die nach außen zeigenden spitzen oder stumpfen Enden mehrerer Magnetelemente zusammen in montiertem Zustand ein gemeinsames konvexes, konisches, insbesondere kegelförmiges oder kegelstumpfförmiges Ende bilden, wie in den nachfolgenden Fig. 6a und 6b beispielhaft gezeigt ist.

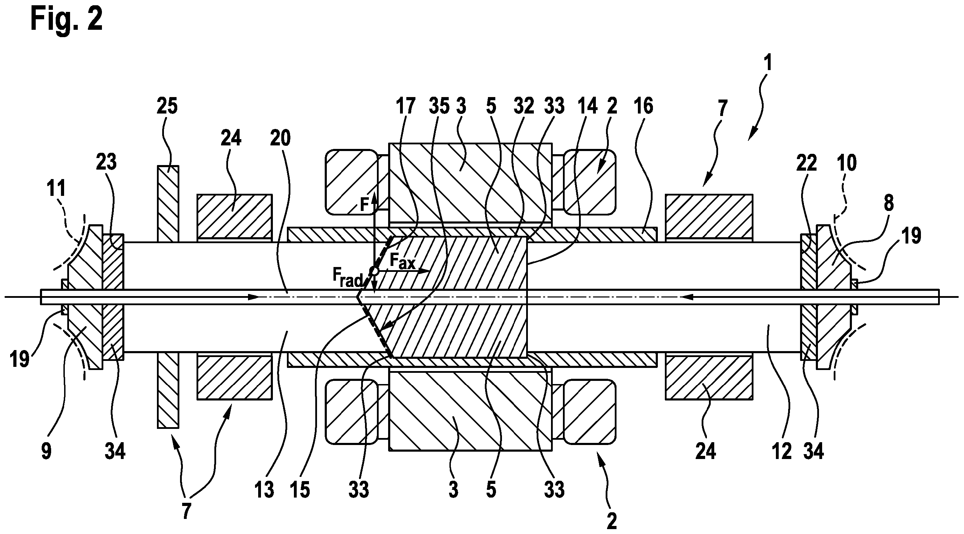

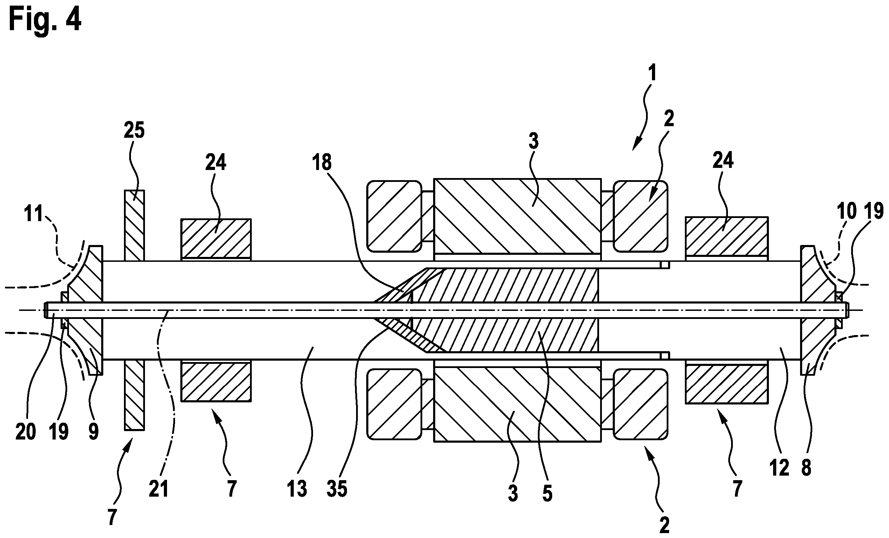

Das jeweilige Magnetelement ist in einer Magnetelement-Aufnahme der elektrischen Maschine 1 aufgenommen und mit seinem nach außen zeigenden oder hervortretende spitzen oder stumpfen Ende in einer zusätzlichen Aufnahme der elektrischen Maschine 1 aufgenommen. In dem Ausführungsbeispiel in Fig. 1 und dem Beispiel nachfolgender Fig. 2 ist eine Hülse 16 vorgesehen, welche an ihrem Innenumfang eine optionale Aussparung 32, z.B. eine Nut usw. aufweist, welche die Magnetelement-Aufnahme bildet. In dem nachfolgenden Ausführungsbeispiel weist die Hülse 16 an ihrem Innenumfang eine optionale Stufe oder Abstufung auf, gegen die das Magnetelement oder eine Trägerplatte in der Magnetelement-Aufnahme der Hülse geschoben werden kann und welche als Anschlag dient. Statt einer Hülse kann auch das Wellenteil selbst, wie in nachfolgender Fig. 4 gezeigt, die Magnetelement-Aufnahme bilden. Dazu weist das Wellenteil an seinem inneren Ende eine sich in Längsrichtung erstreckende Vertiefung auf, in welche das wenigstens eine Magnetelement einschiebbar ist.

In dem Ausführungsbeispiel in Fig. 1 weist des Weiteren das gegenüberliegende Wellenteil 13 eine Aufnahme, hier eine konische Vertiefung auf. In den nachfolgenden Formen in Fig. 2, 3 und 4 bildet eine zwischen Wellenteil und dem Ende des oder der Magnetelemente angeordnete Trägerplatte die Aufnahme in Form einer Vertiefung, für das jeweilige nach außen hervortretende spitze oder stumpfe Ende des zugeordneten Magnetelements. Das Wellenteil bildet dabei eine Aufnahme in Form einer Vertiefung korrespondierend zu der konischen Trägerplatte.

Die im Folgenden noch näher beschriebenen Formen, wie sie in den Fig. 1, 2, 3 und 4 gezeigt sind, weisen im Wesentlichen denselben Aufbau auf und unterscheiden sich lediglich dadurch, dass eine gegenüber der Welle verschiebbare (Schiebesitz) Verbindungsstange 20 zum Verbinden der beiden Wellenteile 12, 13 der Welle 6 sich bei den in Fig. 1, 2 und 4 gezeigten Formen durch beide Wellenteile 12, 13 der

Welle 6 vollständig hindurch erstreckt. In dem in Fig. 3 gezeigten Ausführungsbeispiel erstreckt sich die Verbindungsstange 20 dagegen nur durch eines der beiden Wellenteile vollständig hindurch, während es in das andere Wellenteil lediglich eingeführt und daran befestigt ist, so dass (unter dem Einfluss einer axialen Spannkraft) die Verbindungsstange 20 sich zusammen mit diesem Wellenteil drehen kann.

Fig. 1, sowie die nachfolgenden Fig. 2, 3 und 4 zeigen jeweils zunächst die Grundanordnung von elektromagnetischen, aktiven Komponenten der jeweiligen beispielhaften elektrischen Maschine 1, wie dem Stator 3 mit Wicklungen 2, dem Rotor 4 mit Magnetelement(en) 5, die zweigeteilte Welle 6 und die Lagerelemente 7 des Rotors 4. Die Darstellung in den Fig. 1, 2, 3 und 4, sowie den nachfolgenden Fig. 5a, 5b, 6a und 6b ist dabei rein schematisch, stark vereinfacht und nicht maßstäblich.

Die Maschine 1 mit dem erfindungsgemäßen Rotorsystem bildet in den in Fig. 1 und Fig. 3 gezeigten Ausführungsbeispielen z.B. den Antrieb eines zweistufigen Kompressors oder Verdichters. Der Rotor 4 des erfindungsgemäßen Rotorsystems ist aber weder auf Hochgeschwindigkeitsmaschinen oder Kompressoren bzw. Verdichter noch auf die speziellen Ausführungsformen der elektrischen Maschine, wie sie in Fig. 1 und Fig. 3 gezeigt ist, beschränkt, sondern kann bei jeder elektrischen Maschine eingesetzt werden, welche geeignet ist mit dem Rotor 4 ausgerüstet zu werden.

Die Laufräder 8 und 9 von beiden Verdichterstufen der elektrischen Maschine 1 sind auf gegenüberliegenden Seiten des Motors angeordnet. Ihre Gegenstücke, die Gehäuse 10, 11 oder Voluten sind in Fig. 1, sowie den nachfolgenden Fig. 2, 3 und 4 lediglich mit einer gestrichelten Linie angedeutet.

Wie in Fig. 1 und den nachfolgenden Fig. 2, 3 und 4 gezeigt ist, weist das erfindungsgemäße Rotorsystem den Rotor 4 und die zweiteilige Welle 6 oder zweiteilige Motorwelle mit dem ersten Wellenteil 12 und dem zweiten Wellenteil 13 auf. Die beiden ersten und zweiten Wellenteile 12 und 13 sind auf der gemeinsamen Verbindungsstange 20 angeordnet, deren Längsachse gleichzeitig auch die Rotationsachse 21 der Welle 6 und ihrer Wellenteile 12, 13 und des dazwischen angeordneten Rotors 4 bildet. An dem jeweiligen äußeren Ende 22, 23 des ersten und zweiten Wellenteils 12 bzw. 13 ist in den Fig. 1 und nachfolgenden Fig. 2, 3 und 4 gezeigten Formen jeweils das Laufrad oder sog. Impeller 8 bzw. 9 angeordnet.

Zur Ausbildung des Rotors 4 für eine elektrische Maschine 1, wie sie in Fig. 1 und den nachfolgenden Fig. 2, 3 und 4 beispielhaft gezeigt ist, sind zwischen den beiden inneren Enden 14, 15 der Wellenteile 12 und 13 ein oder mehrere Magnetelemente 5 um die Verbindungsstange 20 angeordnet. Beispielsweise können bei einer segmentierten Bauweise, wie in Fig. 1 und den nachfolgenden Fig. 2, 6a und 6b angedeutet ist, ein, zwei oder mehr Magnetelemente 5 als Magnetstäbe oder -stangen radial um die Verbindungsstange 20 angeordnet werden. Zusätzlich oder alternativ kann auch wenigstens eine Magnethülse oder eine Magnetscheibe als Magnetelement auf der Verbindungsstange 20 angeordnet oder aufgeschoben werden, wie in den nachfolgenden Fig. 3, 4, 6a und 6b angedeutet ist. Im Falle von mehreren Magnethülsen oder -scheiben als Magnetelemente können diese in axialer Richtung hintereinander auf der Verbindungsstange 20 angeordnet werden. Die Magnetelemente 5 sind dabei insbesondere Permanentmagnete, beispielsweise Permanentmagnete aus seltenen Erden.

Bei dem erfindungsgemäßen Rotorsystem, wie es in dem Ausführungsbeispiel in Fig. 1 gezeigt ist, ist die Verbindungsstange 20 dabei, wie zuvor ausgeführt, z.B. durch beide Wellenteile 12, 13 vollständig hindurchgeführt.

Des Weiteren ist die zuvor genannte Rotor-Verbindungshülse oder Hülse 16, z.B. eine zylindrische Hülse, vorgesehen, die sich zumindest über einen jeweiligen Abschnitt der inneren Enden 14, 15 des ersten und zweiten Wellenteils 12 und 13 und über das jeweils dazwischen angeordnete Magnetelement 5 erstreckt.

Die Hülse 16 ist hierbei zumindest mit den beiden inneren Enden 14, 15 oder Endabschnitten der Wellenteile 12 und 13 der Welle 6 in Fig. 1 und den nachfolgenden Fig. 2 und 3 fest verbunden. Dazu ist die Hülse 16 beispielsweise auf das jeweilige innere Ende 14, 15 oder inneren Endabschnitt des ersten und zweiten Wellenteils 12 und 13 aufgepresst oder mittels thermischen Schrumpfens daran befestigt. Die Erfindung ist jedoch auf die genannten Beispiele zum Befestigen der Hülse 16 an den Wellenteilen 12 und 13 oder das Vorsehen einer separaten Hülse nicht beschränkt. Es kann jede Form der Befestigung vorgesehen werden, welche geeignet ist die Hülse 16 an dem jeweiligen Wellenteil 12 bzw. 13 zu befestigen. Des Weiteren ist es auch möglich, eines der Wellenteile selbst mit einer derartigen Magnetelement-Aufnahme auszubilden, wie in nachfolgendem Beispiel in Fig. 4 gezeigt ist. In diesem Fall bildet dabei das

Wellenteil selbst die Hülse. Das andere Wellenteil kann dabei außerdem in das Wellenteil mit der darin integrierten Magnetelement-Aufnahme einsteckbar sein. Die beiden zusammengesteckten Wellenteile können dabei miteinander in axialer Richtung verspannt sein, wie dies auch bei der Ausführungsform in Fig. 1 und den nachfolgenden Fig. 2 und 3 der Fall ist, was im Folgenden noch erläutert wird.

Außen um die Hülse 16 ist der Stator 3 mit seinen Statorwicklungen 2 angeordnet.

Die Hülse 16 ist in den in dem in Fig. 1 gezeigten Ausführungsbeispiel, sowie in nachfolgender Fig. 2, an ihrem Innenumfang mit einer umlaufenden Aussparung 32, z.B. Nut, versehen zur Aufnahme eines jeweiligen Magnetelements 5. In Falle einer solchen Aussparung 32, wie z.B. einer Nut, ist eine segmentierte Bauweise der Magnetelemente 5 erforderlich, um diese in die Aussparung 32 einsetzen zu können. Bei der segmentierten Bauweise werden z.B. wenigstens ein oder zwei Magnetelemente 5 in Form von Stäben oder Stangen zuerst einzeln in die Aussparung 32, z.B. in Form einer Nut eingesetzt. Die Magnetelemente 5 in Form von Stäben oder Stangen bilden dabei mit ihren Innenumfangsflächen eine Durchgangsöffnung, durch welche anschließend die Verbindungsstange 20 hindurchgeführt werden kann.

Wie in dem Ausführungsbeispiel in Fig. 1 gezeigt ist, wird an beiden Enden der Magnetelemente 5 je eine zusätzliche Trägerplatte 18 vorgesehen.

In dem in Fig. 1 gezeigten Ausführungsbeispiel ist an beiden Enden der Magnetelemente 5 jeweils eine Trägerplatte 18 vorgesehen. Da die Trägerplatten 18 in dem Ausführungsbeispiel in Fig. 1 nicht in der Aussparung 32 angeordnet werden sondern in der Hülse 16 außerhalb der Aussparung 32, können die Trägerplatten 18 in die Hülse 16 problemlos eingeschoben werden und müssen nicht segmentiert ausgebildet werden. In diesem Fall ist der Außendurchmesser der Trägerplatte 18 entsprechend an den Innendurchmesser der Einführungsseite der Hülse 16, von wo aus die Trägerplatte 18 in die Hülse 16 bis zu dem Ende des jeweiligen Magnetelements 5 eingeschoben wird, angepasst.

Eine segmentierte Bauweise der jeweiligen Trägerplatte 18 ist wiederum dann erforderlich, wenn diese zusammen mit dem oder den Magnetelementen 5 in der Aussparung 32 der Hülse 16 angeordnet werden soll. In diesem Fall wird die Trägerplatte 18 aus mehreren Trägerplattensegmenten zusammengesetzt, welche in die Aussparung 32 einzeln eingesetzt werden und mit ihrer Innenumfangsfläche anschließend eine Durchführung für die Verbindungsstange 20 bilden.

Beide Enden der in der Hülse 16 aufgenommenen Magnetelemente 5 sind in dem Ausführungsbeispiel in Fig. 1 nach außen hervortretende spitze Ende und bilden zusammen bzw. in montiertem Zustand beispielsweise ein jeweils gemeinsames konisches Ende. Des Weiteren ist eine zusätzliche Trägerplatte 18 zwischen den Magnetelementen 5 und dem jeweiligen Wellenteil 12, 13 vorgesehen.

Erfindungsgemäss ist, wie in dem Ausführungsbeispiel in Fig. 1 und Fig. 3 gezeigt, je eine zusätzliche Trägerplatte 18 zwischen den Magnetelementen 5 und dem Wellenteil 12, 13 vorgesehen. Das Wellenteil 12, 13 ist mit einer Aufnahme für die Trägerplatte 18 ausgebildet, und ist korrespondierend zu dem nach außen hervortretenden spitzen Ende der Trägerplatte 18 mit einer dazu korrespondierenden Vertiefung als Aufnahme ausgebildet. Die Trägerplatte 18 ist wiederum auf der dem jeweiligen Magnetelement 5 gegenüberliegenden Seite mit einer entsprechenden Vertiefung zur Aufnahme des durch die Magnetelemente 5 gebildeten gemeinsamen nach außen zeigenden spitzen oder stumpfen Endes, z.B. eines konischen Endes, ausgebildet. Die Trägerplatten 18 sind in dem Ausführungsbeispiel in Fig. 1 und Fig. 3 z.B. als konisch geformte Scheiben ausgebildet. Diese Trägerplatten 18 in Form von konisch geformten Scheiben können statt als ein Teil, wie in den Fig. 1, 3 und Fig. 4, auch segmentiert ausgebildet sein, um innerhalb der Aussparung 32, z.B. Nut, der Hülse 16 in Fig. 1 und 2 zusammen mit dem jeweiligen Magnetelement 5 angeordnet zu werden.

Die Seitenwände 33 der Aussparung 32, z.B. Nut der Hülse 16 können sowohl senkrecht oder gerade ausgebildet sein, wie in dem Ausführungsbeispiel in Fig. 1 und nachfolgender Fig. 3, als auch alternativ entsprechend an das durch die Magnetelemente 5 gebildete gemeinsame Ende, z.B. konische Ende, angepasst sein, wie in der nachfolgenden Fig. 2. In nachfolgender Fig. 2 verläuft die jeweilige Seitenwand der Aussparung statt senkrecht oder gerade, wie in dem Ausführungsbeispiel in Fig. 1, nach außen geneigt gemäß der konischen Form des durch die Magnetelemente gebildeten gemeinsamen Endes bzw. gemäß der konischen Form einer gegebenenfalls in der Aussparung, z.B. Nut, zusätzlich eingesetzten segmentierten Trägerplatte 18.

Wie in Fig. 1 dargestellt ist, wirkt die Fliehkraft F des jeweiligen Magnetelements 5 in radialer Richtung nach außen auf die Hülse 16. Durch die spezielle Kopplung von nach außen hervortretenden spitzen oder stumpfen Ende des jeweiligen Magnetelements 5, welches in einer dazu korrespondierenden Aufnahme 35 oder Vertiefung der Trägerplatte 18 in Fig. 1, 3 und 4 bzw. der Aufnahme oder Vertiefung des Wellenteils in Fig. 2 aufgenommen ist, kann eine Kraftkomponente in axialer Richtung $F_{ax}$ und eine Kraftkomponente $F_{rad}$ in radialer Richtung entgegen der Fliehkraft erzeugt werden. Dadurch können im Betrieb auftretende Fliehkräfte teilweise kompensiert werden bzw. diesen Fliehkräften entgegengewirkt werden.

In dem in Fig. 1 gezeigten Ausführungsbeispiel ist des Weiteren wahlweise zusätzlich zwischen dem durch die Magnetelemente 5 gebildeten gemeinsamen Ende und der Trägerplatte 18 ein elastisches Ausgleichselement 17 und/oder zwischen der Trägerplatte 18 und dem Wellenteil 12, 13 ein elastisches Ausgleichselement 17 und/oder, wie mit einer gestrichelten Linie in Fig. 1 angedeutet ist, ein elastisches Ausgleichselement 17 zwischen der Innenumfangsfläche der Hülse 16, hier der Aussparung 32, z.B. Nut, der Hülse 16, und der Außenumfangsfläche der Magnetelemente 5 vorgesehen. Dies gilt für alle Ausführungsformen der Erfindung.

Das elastische Ausgleichselement 17 ist beispielsweise wenigstens eine elastische Ausgleichs- oder Verbindungsschicht. Das Material des Ausgleichselements 17 bzw. der in Fig. 1 gezeigten Ausgleichs- oder Verbindungsschicht ist vorzugsweise elektrisch nicht leitend. Als Material für das Ausgleichselement 17 kann beispielsweise ein Harz verwendet werden, wobei das Harz vorzugsweise in ausgehärtetem Zustand zumindest teilweise elastisch ist. Die Erfindung ist jedoch auf ein Harz als Material für das elastische Ausgleichselement 17 nicht beschränkt. Es kann jedes andere Material oder jede andere Materialkombination vorgesehen werden, die geeignet ist die Magnetelemente 5 und das wenigstens eine Wellenteil 12, 13 der elektrischen Maschine 1 sowie gegebenenfalls die wenigstens eine Trägerplatte 18 zu verbinden.

Die Ausgleichs- oder Verbindungsschicht weist elastische und dämpfende Eigenschaften auf. Des Weiteren sorgt die Ausgleichs- oder Verbindungsschicht zwischen Innenumfang der Hülse und Außenumfang des jeweiligen Magnetelements 5 für einen gleichmäßigen Kräfteausgleich bzw. für eine gleichmäßige Verteilung der Vorspannkraft der Magnetelement-Aufnahme der Hülse 16 auf das jeweilige Magnetelement 5 in radialer Richtung, um die durch das jeweilige Magnetelement 5 erzeugte Fliehkraft beim Drehen der Welle 6 abzufangen. Des Weiteren erlaubt das jeweilige elastische Ausgleichselement 17 einen Toleranzausgleich zwischen den Magnetelementen 5 und der Trägerplatte 18 bzw. der Trägerplatte 18 und dem zugeordneten Wellenteil 12, 13, was die Fertigung vereinfacht und die Herstellungskosten senkt. Des Weiteren bewirkt das elastische Ausgleichselement 17 zwischen Trägerplatte und Wellenteil, Trägerplatte und Magnetelement oder zwischen Wellenteil und Magnetelement als Ausgleichs- oder Verbindungsschicht hierbei eine Kompensation von Kräften in axialer Richtung. Ein weiterer Vorteil dieser Schicht ist ein -Toleranzausgleich.

Die Ausgleichs- oder Verbindungsschicht als Ausgleichselement 17 kann bei der Montage beispielsweise in einem halbflüssigen Zustand z.B. auf der Innenseite bzw. Innenumfang der jeweiligen Magnetelement-Aufnahme und/oder der Außenseite bzw. Außenumfang der Magnetelemente 5 und gegebenenfalls der Außenseite bzw. Außenumfang einer vorhandenen Trägerplatte 18 aufgebracht und anschließend thermisch behandelt werden, um auszuhärten und so das elastische Ausgleichselement 17 bereitstellen. Gleiches gilt für das Vorsehen des jeweiligen elastischen Ausgleichselements 17 zwischen der Trägerplatte 18 und dem gemeinsamen Ende der Magnetelemente 5 bzw. der Trägerplatte 18 und der Aufnahme des Wellenteils 12, 13 für die Trägerplatte oder das gemeinsame Ende der Magnetelemente 5. Die Wiedererweichungstemperatur des Materials der Ausgleichs- oder Verbindungsschicht als Ausgleichselement 17 ist dabei ausreichend hoch und insbesondere ausreichend höher als die maximale Betriebstemperatur insbesondere der Magnetelemente 5 und des jeweiligen Wellenteils 12, 13 und seiner Magnetelement-Aufnahme bzw. Hülse, sowie der Trägerplatte 18, so dass die Ausgleichs- oder Verbindungsschicht im Betrieb der elektrischen Maschine 1 nicht ungewollt weich wird.

Das Vorsehen des elastischen Ausgleichselements 17 z.B. in Form der Ausgleichs- oder Verbindungsschicht hat den Vorteil, dass es einen Toleranzausgleich zwischen den hochtolerierten metallischen Elementen, hier insbesondere den Wellenteilen 12 und 13 und den Magnetelementen 5, sowie einer gegebenenfalls vorhandenen Trägerplatte 18 erlaubt, bei deren Fertigung entweder keine genauen Toleranzen möglich sind oder die Nachfolgeprozesse, wie z.B. Schleifen usw., sehr teuer oder unter Umständen sogar gesundheitsschädlich sind. Dies kann beispielsweise bei Magnetelementen 5 der Fall sein, welche auf Neodymium - Seltene-Erden basieren. Die Fliehkräfte der Magnetelemente 5 können durch das elastische Ausgleichselement 17, welches in Fig. 1 mit einer gestrichelten Linie eingezeichnet ist, in einem breiten Betriebsbereich der Drehzahl und der Temperatur neutralisiert bzw. geeignet kompensiert werden.

Das jeweilige zuvor mit Bezug auf verschiedene Ausführungsbeispiele beschriebene Magnetelement 5 kann radial oder diamaterial magnetisiert ausgebildet sein, je nach Funktion und Einsatzzweck. Dies gilt für alle Ausführungsformen der Erfindung.

Wie in Fig. 1 des Weiteren mit einer strichpunktierte Linie dargestellt ist, sind bei der elektrischen Maschine 1 Spannelemente 19 vorgesehen zum Verspannen der Wellenteile 12 und 13 und der dazwischen angeordneten Magnetelemente 5 und der Trägerplatten 18 des Rotors 4 miteinander in axialer Richtung. Die Spannelemente 19 sind dabei in dem in Fig. 1 gezeigten Ausführungsbeispiel z.B. an den beiden äußeren Enden der Laufräder 8, 9 auf der Verbindungsstange 20 angeordnet und einstellbar, um eine geeignete Vorspannung einzustellen. Als Spannelemente 19 können beispielsweise Spannscheiben oder jede anderen geeigneten Spannelemente vorgesehen werden. Im Falle von den zuvor beschriebenen zusammensteckbaren Wellenteilen wie in nachfolgender Fig. 4, bei welchen statt einer Hülse, eines der Wellenteile die Magnetelement-Aufnahme für wenigstens ein Magnetelement und optional wenigstens eine Trägerplatte bildet, können die Wellenteile und das jeweils dazwischen angeordnete Magnetelement und wenigstens eine optionale Trägerplatte ebenfalls mittels derartiger Spannelement vergleichbar dem Ausführungsbeispiel in Fig. 1 miteinander in axialer verspannt werden.

In dem Ausführungsbeispiel in Fig. 1, sowie nachfolgender Fig. 2, können zwischen den äußeren Enden 22 und 23 des ersten und zweiten Wellenteils 12, 13 und dem ersten und zweiten Laufrad 8, 9 zusätzlich optionalen Zwischenscheiben 34 z.B. aus Metall vorgesehen werden. Diese können beispielsweise eine gute Wärmeleitung aufweisen und optional zusätzlich in axialer Richtung federnd sein. Mittels der Zwischenscheiben können unterschiedliche Materialien für die Wellenteile 12, 13 und die gegenüberliegenden Laufräder 8, 9 und die damit verbundenen unterschiedlichen Materialeigenschaften ausgeglichen werden.

Die axialen Trägerplatten 18 sind in dem Ausführungsbeispiel in Fig. 1 und nachfolgendem Beispiel in Fig. 4 an den Enden der Magnetelemente 5 derart angeordnet, dass durch die auf der Verbindungsstange 20 vorgesehenen Spannelemente 19 eine entsprechend in axialer Richtung generierte und geleitete mechanische Vorspannung bereitgestellt werden kann, welche die Aufnahme und radiale Positionierung der Magnetelemente 5 gewährleistet.

Die in erster Linie für die Halterung und Positionierung der Magnetelemente 5 konzipierten axialen Trägerplatten 18 haben des Weiteren die folgende zusätzliche Funktion. Die Trägerplatten 18 sind einem Material mit entsprechend ausgewählten magnetischen Eigenschaften ausgebildet und fangen zusätzlich einen Teil des Streuflusses an beiden Rändern der Magnetelemente 5 ab. Dadurch gelangen die schnell rotierenden magnetischen Felder nicht in die nahe gelegenen stationären Konstruktionselemente der elektrischen Maschine 1. Hierdurch werden Zusatzverluste und die Erwärmung der elektrischen Maschine 1 reduziert. Die Trägerplatten 18 sind erfindungsgemäss aus einem nicht magnetischen Material oder Materialkombination hergestellt, wie z.B. aus Stahl oder aus einem anderen nicht magnetischen Metall oder nicht magnetischen Metalllegierung.

Die Welle 6 ist mittels Radiallagern 24 gelagert, welche auf jeweils einem der Wellenteile 12, 13 angeordnet sind.

Des Weiteren ist an einem Wellenteil, in Fig. 1 und nachfolgenden Fig. 2, 3 und 4 das zweite Wellenteil 13, ein Axiallager 25 vorgesehen. In Fig. 1 und den nachfolgenden Fig. 2 und 3 ist dabei die Rotationsscheibe des Axiallagers 25 dargestellt. Das Axiallager 25 ist beispielsweise ein herkömmliches Gaslager, z.B. ein dynamisches Gaslager. Die Erfindung ist jedoch nicht auf ein herkömmliches Gaslager als Axiallager beschränkt. Grundsätzlich kann jedes Axiallager eingesetzt werden, welches zur Lagerung des Wellenteils der elektrischen Maschine 1 geeignet ist.

Die beiden Laufräder 8, 9 sind fest mit der Verbindungsstange 20 der elektrischen Maschine und dem Rotor 4 durch die Spannelemente 19 verbunden.

Die Verbindungsstange 20 kann beispielsweise aus einem Kohlefasermaterial hergestellt sein. Die Erfindung ist jedoch nicht auf Kohlefasermaterial oder ein anderes Fasermaterial für die Verbindungsstange 20 beschränkt. Es kann jedes Material eingesetzt werden, welches für die Verbindungsstange 20 geeignet ist.

Die Passung zwischen der Verbindungsstange 20 und den Wellenteilen 12, 13 kann derart gewählt werden, dass eine relative Verschiebung zwischen der Verbindungsstange 20 und den Wellenteilen 12, 13 oder ein Schiebesitz der Wellenteile 12, 13 auf der Verbindungsstange 20 vorzugsweise im gesamten Temperaturbereich oder Betriebstemperaturbereich möglich ist.

Die Verbindungsstange 20 ist beispielsweise aus einem Material mit einer guten oder möglichst großen mechanischen Stabilität und Festigkeit und weist vorzugsweise einen möglichst niedrigen thermischen Ausdehnungskoeffizienten auf. Wie zuvor beschrieben kann die Verbindungsstange 20 beispielsweise aus einem Kohlfasermaterial oder einem anderen geeigneten Faserverbundwerkstoff hergestellt sein oder dieses zumindest aufweisen. Die Erfindung ist aber nicht auf einen Faserverbundwerkstoff oder Kohlefasermaterial für die Herstellung der Verbindungstange 20 beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist.

Die schnelllaufende Maschine, z.B. Synchronmaschine, wie sie mit Bezug auf Fig. 1 und den nachfolgenden Fig. 2 und 3 beispielhaft beschrieben wird, weist den Rotor 4 oder sogenannten Mittel-Rotor zwischen der zweiteiligen Welle 6 mit den zwei Wellenteilen 12 und 13 auf. Die beiden Wellenteile 12 und 13 sind durch die folgenden Mittel zu einer sehr stabilen Rotorkonstruktion verbunden. Eines der Mittel ist dabei die zuvor beschriebene Hülse 16, welche auf die beiden Wellenteile 12, 13 z.B. aufgepresst sein kann. Ein weiteres Mittel sind die vorgespannte Verbindungsstange 20 und die axialen Trägerplatten 18, die die Magnetelemente 5, insbesondere Permanentmagnete, in axialer Richtung aufnehmen und in axialer Richtung vorspannen.

Die Konstruktion des Rotors der elektrischen Maschine 1 hat den Vorteil, dass die strukturelle Festigkeit und Steifigkeit bei einer möglichst maximalen aktiven Masse der Magnetelemente 5 vergrößert und damit eine maximal erreichbare Energiedichte der Maschine 1 erzielt werden kann. Weiter kann die Steifigkeit durch die Einstellung der Zugkraft an der Verbindungsstange 20 eingestellt werden. Die Verbindungsstange 20 oder -stab arbeitet auf Zug. Dies hat einen großen Einfluss auf das Vergrößern der Steifigkeit bei einer nur sehr kleinen Zusatzmasse und einem vernachlässigbaren Zusatz-Trägheitsmoments des Rotors 4. Des Weiteren erfolgt keine wesentliche Reduzierung der aktiven Magnetmasse $Vm$, wobei für die Magnetmasse $Vm$ gilt:

$$V_m = \frac{\pi}{4}(Dm^2 - Dst^2) \cdot Lm$$

Wobei $Dst \ll Dm$
$Vm$: Magnetmasse
$Dst$: Durchmesser der Verbindungsstange
$Dm$ : Magnetdurchmesser
$Lm$ : Magnetlänge

Die Verbindungsstange 20 weist beispielsweise eine zylindrische Form auf oder zumindest einen zylindrischen Abschnitt mit dem Durchmesser $Dst$.

In Fig. 2 ist eine Beispiel einer elektrischen Maschine 1 mit einem Rotorsystem aus Rotor 4 und zweigeteilter Welle 6 gezeigt Wie zuvor bereits ausgeführt wurde, weist die Welle 6 die beiden Wellenteile 12 und 13 auf, durch welche die Verbindungsstange 20 vollständig hindurchgeführt ist. Die Hülse 16 zur Aufnahme eines jeweiligen Magnetelements 5 ist mit der Aussparung 32, z.B. Nut, am Innenumfang als Magnetelement-Aufnahme ausgebildet, so dass eine segmentierte Bauweise der Magnetelemente 5 erforderlich ist. Wie zuvor beschrieben ist die Hülse 16 zumindest mit den beiden inneren Enden 14, 15 oder Endabschnitten der Wellenteile 12 und 13 verbunden, z.B. durch Verpressen oder Aufschrumpfen usw.

In dem Beispiel in Fig. weisen die Magnetelemente 5 jeweils ein flaches oder ebenes Ende und ein nach außen gewölbtes oder nach außen hervortretendes spitzes oder stumpfes Ende auf. Ein Beispiel für Magnetelemente 5 mit nach außen hervortretenden spitzen und stumpfen Enden ist in Fig. 6a und 6b gezeigt. Das durch die Magnetelemente 5 mit ihren nach außen hervortretenden spitzen oder stumpfen Enden gebildete gemeinsam nach außen hervortretende spitze oder stumpfe Ende, z.B. ein konisches Ende, wie es in Fig. 2 gezeigt ist, ist in einer entsprechenden Aufnahme des gegenüberliegenden Wellenteils 13 aufgenommen. Das Wellenteil 13 ist dabei an seinem inneren Ende 15 mit einer zu dem gemeinsamen Ende der Magnetelemente 5 korrespondierend ausgebildeten Vertiefung als Aufnahme ausgebildet. Die Aufnahme kann z.B. als eine konische, kegelförmige oder kegelstumpfförmige Vertiefung usw. ausgebildet sein, um ein durch die Magnetelemente 5 gebildetes spitzes oder stumpfes Ende aufzunehmen. Wahlweise zusätzlich kann zwischen den Wellenteilen 12, 13 und den Magnetelementen eine zusätzliche Trägerplatte ( in Fig. 2 nicht dargestellt) vorgesehen sein. Ist die Trägerplatte dabei mit den Magnetelementen in der Aussparung 32 wie der Nut angeordnet, so ist die Trägerplatte zusätzlich segmentiert ausgebildet.

Die eine Seitenwand 33 der Aussparung 32 wie Nut der Hülse 16 ist in dem Beispiel in Fig. 2 senkrecht oder gerade ausgebildet entsprechend dem durch die Magnetelemente 5 gebildeten gemeinsamen flachen oder geraden Ende. Die andere Seitenwand 33 der Aussparung 32 wie der Nut ist an das andere durch die Magnetelemente 5 gebildete gemeinsame Ende, z.B. konische Ende, angepasst, wie ebenfalls in Fig. 2 gezeigt ist. Diese Seitenwand der Aussparung 32 ist gemäß der nach außen hervortretenden spitzen oder stumpfen Enden der Magnetelemente 5 und dem durch diese gemeinsam gebildeten konischen Ende geneigt oder abgeschrägt. Entsprechendes gilt wenn in der Aussparung 32 eine zusätzliche segmentierte Trägerplatte an dem Ende der Magnetelemente eingesetzt ist.

Wie in Fig. 2 dargestellt ist, wirkt die Fliehkraft F des jeweiligen Magnetelements 5 in radialer Richtung nach außen auf die Hülse 16. Durch die spezielle Kopplung von nach außen hervortretendem spitzen oder stumpfen Ende des jeweiligen Magnetelements 5, welches in einer dazu korrespondierenden Vertiefung bzw. Aufnahme des Wellenteils 13 aufgenommen ist, kann eine Kraftkomponente in axialer Richtung $F_{ax}$ und eine Kraftkomponente $F_{rad}$ in radialer Richtung entgegen der Fliehkraft erzeugt werden. Dadurch können im Betrieb auftretende Fliehkräfte teilweise kompensiert werden bzw. diesen Fliehkräften entgegengewirkt werden.

Wie in Fig. 2 mit einer gestrichelten Linie angedeutet ist, kann zwischen wenigstens einem Ende der Magnetelemente 5 und dem gegenüberliegenden Wellenteil, hier z.B. dem zweiten Wellenteil 13, das zuvor mit Bezug auf Fig. 1 beschriebene elastische Ausgleichselements 17 vorgesehen werden. Ebenso kann auch zwischen der Innenseite oder Innenumfang der Aussparung 32, z.B. in Form einer Nut, und der Außenseite oder dem Außenumfang der Magnetelemente 5 ein solches elastisches Ausgleichselement vorgesehen werden.

In dem Fall, dass wie zuvor in dem Ausführungsbeispiel in Fig. 1 eine zusätzliche Trägerplatte an wenigstens einem Ende der Magnetelemente 5 vorgesehen ist, kann auch ein elastisches Ausgleichselement zwischen Trägerplatte und Wellenteil und/oder Trägerplatte und Magnetelement(en) vorgesehen werden.

Die elektrische Maschine 1 in Fig. 2 weist ansonsten denselben Aufbau auf, wie die elektrische Maschine in Fig. 1, insbesondere in Bezug auf den Stator 3, die Zwischenscheiben, die Radiallager und das Axiallagers, so dass hierzu auf die Beschreibung zu Fig. 1 verwiesen wird, um unnötige Wiederholungen zu vermeiden.

In Fig. 3 ist noch ein weiteres Ausführungsbeispiel einer elektrischen Maschine 1 mit einem erfindungsgemäßen Rotorsystem aus Rotor 4 und zweigeteilter Welle 6 gezeigt.

Die Welle 6 weist, wie zuvor ausgeführt die beiden Wellenteilen 12 und 13 auf, wobei sich die Verbindungsstange 20 nur durch das eine Wellenteil 12 vollständig hindurch erstreckt während ein Ende der Verbindungsstange 20 in dem anderen Wellenteil 13 aufgenommen und befestigt ist. Die Verbindungsstange 20 ist dabei derart an dem Wellenteil 13 befestigt, dass die Verbindungsstange 20 sich zusammen mit dem Wellenteil 13 dreht. Dabei kann die Verbindungsstange 20 in dem Ausführungsbeispiel, wie in Fig. 3 gezeigt ist, beispielsweise kraft- und/oder formschlüssig mit dem Wellenteil 13 fest verbunden werden. Die Befestigung der Verbindungsstange 20 wird im Folgenden noch näher beschrieben.

Die Hülse 16 zur Aufnahme eines jeweiligen Magnetelements 5 weist in dem Ausführungsbeispiel in Fig. 3 statt einer Aussparung, z.B. in Form einer Nut, wie zuvor in den Fig. 1 und 2, eine Stufe 36 oder Abstufung auf, welche als Anschlag für das jeweilige Magnetelement 5 in der Magnetelement-Aufnahme der Hülse 16 dient, die durch den Innenumfang der Hülse 16 gebildet wird. Dabei ist keine segmentierte Ausführung der Magnetelementanordnung oder der Trägerplatte 18 notwendig, so dass auch ein hülsenförmiges oder scheibenförmiges Magnetelement, wie beispielhaft in den nachfolgenden Fig. 5a und 5b dargestellt, eingeführt werden kann.

In dem Ausführungsbeispiel in Fig. 3 ist ein Magnetelement 5 mit zwei nach außen zeigenden oder hervortretenden spitzen oder alternativ stumpfen Enden vorgesehen. In dem in Fig. 3 gezeigten Ausführungsbeispiel ist das nach außen zeigende oder hervortretende spitze Ende z.B. konisch ausgebildet und mit einer zusätzlich abgeschrägten Außenkante 37 zum Umgreifen durch eine gegebenenfalls vorhandene Trägerplatte 18, wie in Fig. 3 gezeigt ist, oder eine Aufnahme des Wellenteils 12, 13, wenn keine zusätzliche Trägerplatte vorhanden ist, versehen.

In dem Ausführungsbeispiel in Fig. 3 ist an beiden Enden des Magnetelements 5 jeweils eine Trägerplatte 18 eingesetzt. Die Trägerplatte 18 weist als Aufnahme 35 dabei auf der Seite des Magnetelements 5 eine entsprechende Vertiefung auf und weist dabei außerdem einen Abschnitt zum Umgreifen der abgeschrägten Außenkante 37 des Endes des Magnetelements 5 auf. Die Trägerplatte 18 ist des Weiteren auf der Seite des jeweiligen Wellenteils 12, 13 korrespondierend zu dem Wellenteil 12, 13 ausgebildet. Die Wellenteile 12, 13 sind jeweils mit einer konischen Vertiefung, ausgebildet entsprechend der konischen Form der zusätzlichen Trägerplatte 18 auf der dem Wellenteil 12, 13 zugewandten Seite. Falls - nicht zur Erfindung gehörend-keine Trägerplatte 18 vorgesehen ist können die Wellenteile 12, 13 mit einer Aufnahme in Form einer Vertiefung ausgebildet sein, die zu dem nach außen zeigenden oder hervortretenden spitzen oder stumpfen Ende des Magnetelements 5 korrespondiert: Die Aufnahme des Wellenteils 12, 13 kann dabei des Weiteren mit einem Abschnitt zum Umgreifen der abgeschrägten Außenkante des Endes des Magnetelements 5 versehen sein zur Aufnahme des Endes des Magnetelements 5 bzw. des gemeinsamen Endes der Magnetelemente.

Der Boden der Vertiefung der Hülse 16 kann, vergleichbar der Seitenwand der Aussparung, z.B. in Form einer Nut zuvor in Fig. 1 und 2, senkrecht oder gerade ausgebildet sein oder wie in dem Ausführungsbeispiel in Fig. 3 angedeutet ist, gemäß der Schräge der Trägerplatte 18 oder falls diese nicht vorhanden ist gemäß der Schräge des Endes des Magnetelements 5 verlaufend ausgebildet sein.

Wie in Fig. 3 dargestellt ist, wirkt die Fliehkraft F des Magnetelements 5 in radialer Richtung nach außen auf die Hülse 16. Durch die spezielle Kopplung von nach außen hervortretendem spitzen oder stumpfem Ende des jeweiligen Magnetelements 5, welches in einer dazu korrespondierenden Aufnahme der Trägerplatte 18 aufgenommen ist, kann eine Kraftkomponente in axialer Richtung $F_{ax}$ und eine Kraftkomponente $F_{rad}$ in radialer Richtung entgegen der Fliehkraft F erzeugt werden. Dadurch können im Betrieb auftretende Fliehkräfte teilweise kompensiert werden bzw. diesen Fliehkräften entgegengewirkt werden.

Auch in dem in Fig. 3 gezeigten Ausführungsbeispiel, kann wie zuvor in Fig. 1 dargestellt, ein elastisches Ausgleichselement zwischen der jeweiligen Trägerplatte 18 und dem zugeordneten Wellenteil 12 bzw. 13, sowie zwischen der jeweiligen Trägerplatte 18 und dem Magnetelement 5 vorgesehen sein. Ebenso kann zwischen der Innenseite oder dem Innenumfang der Magnetelement-Aufnahme bzw. der Vertiefung der Hülse 16 und der Außenseite oder dem Außenumfang des Magnetelements 5 und gegebenenfalls der Außenseite oder dem Außenumfang der jeweiligen Trägerplatte 18 ein elastisches Ausgleichselement vorgesehen werden.

Die elektrische Maschine 1 in Fig. 3 weist ebenfalls denselben Aufbau auf wie die elektrischen Maschinen in Fig. 1 und 2, insbesondere in Bezug auf den Stator 3, der Radiallager und das Axiallager, so dass hierzu auf die Beschreibung zu Fig. 1 und 2 verwiesen wird, um unnötige Wiederholungen zu vermeiden.

Wie zuvor ausgeführt ist die Verbindungsstange 20 in eines der Wellenteile 13 eingeführt und an diesem befestigt. Beispielsweise kann die Verbindungsstange 20 durch Verpressen, Verstiften, Verschrauben, Verbolzen und/oder Verkleben an dem zweiten Wellenteil 13 befestigt werden. Hierzu sind wenigstens ein Stift, eine Schraube und/oder ein Bolzen vorgesehen, mit welchem die Verbindungsstange 20 an dem Wellenteil 13 oder einer Vertiefung, z.B. einer Aufnahmebohrung, befestigt wird. Der Stift oder Bolzen wird beispielsweise durch eine in radialer Richtung verlaufende Bohrung des Wellenteils in eine zu koaxial verlaufende Bohrung der Verbindungsstange im Inneren der Welle 13 ein- oder hindurchgeführt. Dadurch wird die Verbindungsstange 20 in dem Wellenteil 13 befestigt, so dass die Verbindungsstange 20 nicht ungewollt aus dem Wellenteil 13 wieder herausgezogen werden kann. Des Weiteren ist die Verbindungsstange 20 gegen eine Verdrehen gesichert und dreht sich mit dem Wellenteil 13 mit aber nicht ungewollt relativ zu dem Wellenteil 13. Gleiches gilt, wenn statt eines Stifts oder Bolzens eine Schraube verwendet wird. Diese kann durch eine in radialer Richtung verlaufende Bohrung in eine dazu koaxial verlaufende Gewindebohrung der Verbindungsstange eingeschraubt werden. Ebenso kann die Schraube auch durch die Bohrung in dem Wellenteil und eine dazu koaxial verlaufende Bohrung in der Verbindungsstange hindurchgeführt und eine darauffolgende in dem Wellenteil 13 ebenfalls dazu koaxial verlaufende Gewindebohrung eingeschraubt werden. Als Klebstoff zum Befestigen der Verbindungsstange in der Verbindungsstangen-Aufnahme oder Vertiefung wird im Falle von Verkleben ein Klebstoff gewählt, welcher für die Betriebstemperaturen der elektrischen Maschine und ihres Rotorsystems geeignet ist und insbesondere hierbei ausreichend temperaturbeständig ist. Bei einer formschlüssigen Verbindung kann die Verbindungsstange einen zylindrischen Endabschnitt aufweisen, welcher mit einer dazu korrespondierenden zylindrischen Bohrung als Verbindungsstangen-Aufnahme der Welle 13 eine Presspassung bildet. Ebenso ist es denkbar, dass die Verbindungsstange beispielsweise ein Ende mit einem eckigen, runden und/oder ovalen Querschnitt aufweist, der formschlüssig in einer entsprechenden Vertiefung oder Verbindungsstangen-Aufnahme mit einem dazu korrespondierenden eckigen, runden und/oder ovalen Querschnitt aufgenommen ist. Die Erfindung ist aber auf diese Form der Befestigung nicht beschränkt. Es kann jede Form der Befestigung oder Kombination von Befestigungen vorgesehen werden, die geeignet ist die Verbindungsstange 20 an dem Wellenteil 13 zu befestigen. Die Verbindungsstange 20 ist beispielsweise aus einem Material mit einer guten oder möglichst großen mechanischen Stabilität und Festigkeit und weist vorzugsweise einen möglichst niedrigen thermischen Ausdehnungskoeffizienten auf. Die Verbindungsstange 20 kann beispielsweise aus einem Kohlfasermaterial oder einem anderen geeigneten Faserverbundwerkstoff hergestellt sein oder diesen zumindest aufweisen. Die Erfindung ist aber nicht auf einen Faserverbundwerkstoff oder Kohlefasermaterial für die Herstellung der Verbindungstange 20 beschränkt. Es kann jedes andere Material oder Materialkombination für die Verbindungsstange 20 eingesetzt werden, einschließlich ein geeignetes Metall oder eine geeignete Metalllegierung, welche sich bei Wärme möglichst wenig ausdehnt und eine möglichst große mechanische Festigkeit und Stabilität aufweist. Im Falle einer Verbindungsstange aus Metall oder einer Metalllegierung kann in Ausführungsformen der Erfindung die Verbindungsstange 20 auch einteilig mit dem zweiten Wellenteil 13 ausgebildet sein oder an diesem durch Schweißen oder Löten befestigt sein. Zumindest das zweite Wellenteil 13 der zweigeteilten Welle 6 ist dabei dem entsprechend ebenfalls aus Metall oder einer Metalllegierung. Im Fall von einem Faserverbundwerkstoff der Verbindungsstange 20 ist es auch denkbar diese einstückig zusammen mit dem zweiten Wellenteil aus einem Faserverbundwerkstoff, z.B. Kohlfasermaterial usw. auszubilden.

Zum axialen Verspannen der beiden Wellenteile 12, 13 und des dazwischen angeordneten wenigstens einen Magnetelements 5, sowie der Trägerplatte oder Trägerplatten 18 sofern vorhanden, ist ein Spannelement 19 vorgesehen. Das Spannelement 19 ist beispielsweise außen an dem ersten Laufrad 8 vorgesehen, beispielsweise in einer Vertiefung des Laufrads. Als Spannelement 19 kann beispielsweise eine Spannscheibe oder jedes andere geeignete Spannelement vorgesehen werden.

In Fig. 4 ist ein weiteres Beispiel einer elektrischen Maschine 1 mit einem Rotorsystem aus Rotor 4 und zweigeteilter Welle 6 gezeigt

Die Welle 6 weist, wie zuvor ausgeführt die beiden Wellenteile 12 und 13 auf, wobei die beiden Wellenteile 12, 13 zusammensteckbar ausgebildet und auf einer durchgehenden Verbindungsstange 20 angeordnet sind. Ein Wellenteil 13 weist an seinem inneren Ende als Magnetelement-Aufnahme eine sich in Längsrichtung erstreckende Vertiefung auf. Des Weiteren weist das Wellenteil 13 dabei eine Aufnahme für eine konische Trägerplatte 18 und ein nach außen hervortretendes spitzes oder, wie mit einer gepunkteten Linie als Alternative angedeutet, stumpfes Ende des Magnetelements 5 auf. Die Darstellung in Fig. 4 ist dabei stark vereinfacht, rein schematisch und nicht maßstäblich. Als Magnetelement ist dabei ein hülsenförmiges Magnetelement 5 in die Magnetelement-Aufnahme des Wellenteils 13 eingeschoben. Die Trägerplatte 18 kann wie in dem Beispiel in Fig. 4 gezeigt ist als eine kegelförmige Scheibe oder alternativ auch als eine kegelstumpfförmige Scheibe ausgebildet sein und in der in Fig. 4 gezeigten Aufnahme oder Vertiefung des Wellenteils 13 aufgenommen werden.

Wahlweise zusätzlich kann in dem Beispiel in Fig. 4 auch ein elastisches Ausgleichselement zwischen der optionalen Trägerplatte 18 und dem Wellenteil 13, der Trägerplatte 18 und dem Magnetelement 5 und/oder dem Außenumfang des Magnetelements 5 oder der Trägerplatte 18 und dem Innenumfang des Wellenteils 13 vorgesehen werden, wie zuvor mit Bezug auf die Fig. 1-3 beschrieben wurde. Auch eine zusätzliche Zwischenscheibe kann wie zuvor in Fig. 1 und 2 zwischen dem jeweiligen Laufrad 8, 9 und dem Wellenteil 12, 13 vorgesehen werden. Mittels des anderen Wellenteils 12, welches ebenfalls in die Vertiefung des Wellenteils 13 eingeführt ist, können die Wellenteile 12, 13 und das wenigstens eine Magnetelement 5, sowie die wenigstens eine optionale Trägerplatte 18 miteinander in axialer Richtung durch Spannelemente 19 gegeneinander verspannt werden. Eine Reduzierung der Fliehkraft des Magnetelements kann, wie bereits mit Bezug auf die Fig. 1-3 beschrieben wurde erzielt werden.

Die elektrische Maschine 1 in Fig. 4 weist darüber hinaus denselben Aufbau auf wie die elektrischen Maschinen in Fig. 1, 2 und 3, insbesondere in Bezug auf den Stator 3, die Radiallager und das Axiallager, so dass hierzu auf die Beschreibung zu Fig. 1, 2 und 3 verwiesen wird, um unnötige Wiederholungen zu vermeiden.

In den Fig. 5a und 5b ist ein Beispiel für ein hülsenförmiges Magnetelement 5 gezeigt, wobei Fig. 5a eine Seitenansicht und Fig. 5b eine Querschnittansicht des hülsenförmigen Magnetelements 5 zeigt.

Das Magnetelement 5 kann z.B. als Zylinder wie in Fig. 5a gezeigt ist mit einem flachen Ende und einem kegelstumpfförmigen Ende als einem Beispiel für ein nach außen hervortretendes stumpfes Ende ausgebildet sein, oder wie in Fig. 5a mit einer gepunkteten Linie angedeutet ist, ein kegelförmiges Ende als ein Beispiel für ein nach außen hervortretendes spitzes Ende aufweisen. Die Erfindung ist jedoch auf die gezeigten Beispiele für nach außen hervortretende spitze und stumpfe Enden nicht beschränkt.

Des Weiteren kann das Magnetelement 5, wie in Fig. 5b durch Pfeile angedeutet, diametral oder radial magnetisiert sein. Wenigstens ein solches hülsenförmiges oder scheibenförmiges Magnetelement 5 kann in der Magnetelement-Aufnahme in Fig. 3 und 4 eingeführt oder eingeschoben werden. Im Falle von mehreren solchen Magnetelementen 5, können diese in axialer Richtung hintereinander in die Magnetelement-Aufnahme eingeführt werden.

In den Fig. 6a und 6b ist ein Beispiel für eine segmentierte Magnetelement-Anordnung aus beispielsweise zwei Magnetelementen 5 gezeigt, wobei Fig. 6a eine Seitenansicht und Fig. 6b eine Querschnittansicht der Magnetelemente 5 zeigt.

Die beiden Magnetelemente 5 können, wie in Fig. 6a gezeigt ist, jeweils ein flaches Ende und ein nach außen hervortretendes spitzes Ende aufweisen oder wie in Fig. 6a mit einer gepunkteten Linie angedeutet ist auch ein nach außen hervortretendes stumpfes Ende aufweisen zum Ausbilden eines gemeinsamen kegelstumpfförmigen oder kegelförmigen Endes der Magnetelemente. Die beiden Magnetelemente 5 können wie zuvor beschrieben in eine Aussparung als Magnetelement-Aufnahme, z.B. nutförmige Magnetelement-Aufnahme, eines Wellenteils eingesetzt werden, wobei sie mit ihrem Innenumfang eine Durchführung für die Verbindungsstange bilden, welche z.B. anschließend hindurchgeführt werden kann.

Des Weiteren können die Magnetelemente 5, wie in Fig. 6b durch Pfeile angedeutet, diametral oder radial magnetisiert sein. Wenigstens eines dieser Magnetelemente 5 kann in der Aussparung, z.B. in Form einer Nut, in dem Ausführungsbeispiel in Fig. 1 und 2, sowie auch in der Magnetelement-Aufnahme in den Fig. 3 und 4 eingesetzt werden.

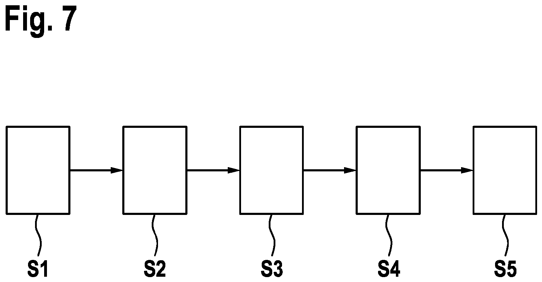

In Fig. 7 ist ein Flussdiagramm zur Herstellung des zuvor beispielhaft mit Bezug auf Fig. 1, 2, 3, 4 sowie 5a, 5b, 6a und 6b beschriebene Rotorsystems dargestellt.

Zur Herstellung der elektrischen Maschine und ihres Rotors wird in einem ersten Schritt S1 wenigstens eines der Wellenteile mit einer Magnetelement-Aufnahme zur Aufnahme des jeweiligen Magnetelements und einer Aufnahme zur Aufnahme des zugeordneten Endes des jeweiligen Magnetelements bereitgestellt, wie zuvor in Fig. 4 gezeigt, oder eine Hülse als Magnetelement-Aufnahme bereitgestellt, welche später mit den inneren Enden der beiden Wellenteile verbunden wird und beispielhaft zuvor in den Fig. 1-3 gezeigt ist. Zur Aufnahme des Endes des jeweiligen Magnetelements kann dabei das zugeordnete Wellenteil mit einer Aufnahme in Form einer Vertiefung oder eine optionale Trägerplatte mit einer Aufnahme in Form einer Vertiefung bereitgestellt werden. Die Aufnahme in Form einer Vertiefung ist dabei bei dem Wellenteil bzw. der Trägerplatte korrespondierend zu dem Ende des Magnetelements oder bei mehreren korrespondierend zu dem gemeinsamen durch die Magnetelemente gebildeten Ende ausgebildet.

Die Magnetelement-Aufnahme kann an ihrem Innenumfang oder das jeweilige Magnetelement an seinem Außenumfang optional mit dem elastischen Ausgleichselement versehen werden, bevor das jeweilige Magnetelement anschließend in die Magnetelement-Aufnahme eingeführt wird. Gleiches gilt für die Aufnahme des Endes des Magnetelements bzw. der Magnetelemente.

In einem nächsten Schritt S2 wird das jeweilige Magnetelement in die Magnetelement-Aufnahme eingeführt. Wahlweise zusätzlich kann dabei eine erste Trägerplatte in die Magnetelement-Aufnahme eingeführt werden, bevor anschließend das jeweilige Magnetelement in die Magnetelement-Aufnahme eingesetzt wird. Je nach Ausführung der Magnetelement-Aufnahme, z.B. in Form einer Nut, kann die Magnetelement-Anordnung und sofern vorhanden die Trägerplatte(n) segmentiert ausgebildet sein.

In einem weiteren Schritt S3 kann eine zweite Trägerplatte wahlweise zusätzlich an dem äußeren Ende des jeweiligen Magnetelements angeordnet werden. Sofern eine erste Trägerplatte bereits in der Magnetelement-Aufnahme positioniert wurde, wird lediglich die zweite verbleibende Trägerplatte ebenfalls in der Magnetelement-Aufnahme oder daran anschließend in dem Wellenteil angeordnet. Dabei kann zwischen der Innenseite der Magnetelement-Aufnahme oder Innenseite des Wellenteils und der Außenseite der zweiten Trägerplatte wahlweise zusätzlich ebenfalls das elastische Ausgleichselement vorgesehen sein.

Des Weiteren kann sowohl zwischen Wellenteil und Ende des jeweiligen Magnetelements ein elastisches Ausgleichselement vorgesehen werden oder falls eine Trägerplatte dazwischen angeordnet ist zwischen dem Wellenteil und der Trägerplatte und/oder zwischen der Trägerplatte und dem Magnetelement ein elastisches Ausgleichselement vorgesehen werden.

In einem nächsten Schritt S4 werden die beiden Wellenteile zusammengesteckt, wie in dem Beispiel in Fig. 4, oder wenn eine Hülse als Magnetelement-Aufnahme vorgesehen ist, die Hülse an den beiden Wellenteilen befestigt, z.B. durch Verpressen oder Aufschrumpfen, wie in Fig. 1-3 gezeigten Formen.

Das Aushärten des für das Ausgleichselement verwendeten Harzes kann beispielsweise je nach verwendetem Harz vor und/oder nach dem Positionieren des jeweiligen Magnetelements in der Magnetelement-Aufnahme, sowie vor und/oder nach dem Positionieren gegebenenfalls einer ersten oder zweiten Trägerplatte erfolgen.

Die Verbindungsstange kann in dem zuvor in Fig. 3 gezeigten Ausführungsbeispiel, zunächst an dem zugeordneten Wellenteil befestigt werden, bevor Elemente wie die Hülse, das jeweilige Magnetelement und gegebenenfalls eine Trägerplatte sowie elastische Ausgleichselemente montiert werden.

Die Verbindungsstange kann im Falle der zuvor in den Fig. 1, 2 und 4 gezeigten Formen auch im Anschluss an den Schritt S2 durch das Wellenteil und die durch das jeweilige Magnetelement gebildete Durchführung und, falls bereits eingesetzt, durch die Öffnung der ersten Trägerplatte hindurchgeführt werden.

Ebenso kann erst im Anschluss an den Schritt S3 vor dem Schritt S4 die Verbindungsstange im Falle der zuvor in den Fig. 1, 2 und 4 gezeigten Formen durch das Wellenteil, die Öffnung der ersten und zweiten Trägerplatte und die Durchführung des jeweiligen Magnetelements hindurchgeführt werden.

Des Weiteren kann in dem Fall, dass keine Hülse als Magnetelement-Aufnahme vorgesehen ist, sondern ein Wellenteil die Magnetelement-Aufnahme selbst bildet und die Verbdingungsstange hierbei durch beide Wellenteile vollständig hindurchgeführt wird, die Verbindungsstange auch erst in dem Schritt S4 nach dem Zusammenstecken der beiden Wellenteile durch die Wellenteile und den Rotor aus einem oder mehreren Magnetelementen und falls vorhanden wenigstens einer Trägerplatte hindurchgesteckt werden. Ebenso kann auch die Verbindungsstange erst durch das Wellenteil und seinen Rotor hindurchgeführt und dann das andere Wellenteil auf die Verbindungsstange aufgesteckt werden oder alternativ das andere Wellenteil zusammen mit der Verbindungsstange mit dem Rotor und seinem Wellenteil zusammengesteckt werden.

Das jeweilige Magnetelement, insbesondere das hülsenförmige oder scheibenförmige Magnetelement, kann radial oder diamaterial magnetisiert ausgebildet sein. Dies gilt für alle Ausführungsformen der Erfindung.

Zum Herstellen einer elektrischen Maschine, wie sie zuvor mit Bezug auf die Fig. 1, 2, 3 und 4 beschrieben wurde, mit dem Rotor, werden in einem anschließenden zusätzlichen Schritt S5, nach dem Verbinden der Wellenteile in Schritt S4, die beiden Laufräder angeordnet und der Rotor in axialer Richtung verspannt.

Die radiale und axiale Lagerung der Welle mittels wenigstens zwei Radiallagern und wenigstens einem Axiallager können in einem geeigneten der zuvor beschriebenen Schritte vorgesehen werden.

**Patentansprüche**

1. Elektrische Maschine (1) aufweisend:

   eine zweigeteilte Welle (6) mit einem ersten und zweiten Wellenteil (12, 13), zwischen denen ein Rotor (4) angeordnet und mit den beiden Wellenteilen (12, 13) verbunden ist, wobei der Rotor (4) eine Magnetelement-Aufnahme (16) aufweist, in welcher wenigstens ein Magnetelement (5) aufgenommen ist, wobei eine Verbindungsstange (20)

      - entweder durch ein Wellenteil (12) und den Rotor (4) mit seinem wenigstens einen Magnetelement (5) vollständig hindurchgeführt ist und in das andere Wellenteil (13) teilweise eingeführt und an diesem befestigt ist, insbesondere formschlüssig und/oder kraftschlüssig befestigt ist,
- oder durch beide Wellenteile (12, 13) und den Rotor (4) mit seinem wenigstens einen Magnetelement (5) vollständig hindurchgeführt ist und die beiden Wellenteile (12, 13) und der Rotor (4) in axialer Richtung miteinander verspannt sind, insbesondere durch Spannelemente (19),

wobei beide Enden des Magnetelements (5) als nach außen hervortretende spitze oder stumpfe Enden ausgebildet sind, welche in dazu korrespondierenden Aufnahmen (35) der elektrischen Maschine (1) aufgenommen sind, **dadurch gekennzeichnet, dass** die Aufnahmen (35) zum Aufnehmen der Enden des Magnetelements (5) mit seinen nach außen hervortretenden spitzen oder stumpfen Enden als Vertiefungen in jeweils einer zwischen dem jeweiligen Wellenteil (12, 13) und dem wenigstens einen Magnetelement (5) angeordneten Trägerplatte (18) ausgebildet sind, wobei die Trägerplatten (18) nicht magnetisch sind, wobei die Trägerplatten (18) jeweils auf der dem jeweiligen Wellenteil (12, 13) gegenüberliegenden Seite nach außen konisch zulaufend ausgebildet sind und die Wellenteile (12, 13) jeweils eine dazu korrespondierende Vertiefung zur Aufnahme der jeweiligen Trägerplatte (18) aufweisen.

**2.** Elektrische Maschine (1) nach Anspruch 1, **dadurch gekennzeichnet, dass** eine Hülse (16) vorgesehen ist, welche die Magnetelement-Aufnahme aufweist, und an den beiden inneren Enden (14, 15) der Wellenteile (12, 13) befestigt ist, wobei die Hülse (16) mit ihrem Innenumfang die Magnetelement-Aufnahme bildet und mit einer zusätzlichen Aussparung (32) an ihrem Innenumfang zur Aufnahme des wenigstens einen Magnetelements (5) oder einer zusätzlichen Stufe (36) am Innenumfang als Anschlag für das wenigstens eine Magnetelement (5) ausbildbar ist.

**3.** Elektrische Maschine (1) nach Anspruch 1 oder 2, **dadurch gekennzeichnet, dass** die Vertiefung als eine konische, kegelförmige oder kegelstumpfförmige Vertiefung ausgebildet ist.

**4.** Elektrische Maschine (1) nach einem der Ansprüche 1 bis 3, **dadurch gekennzeichnet, dass** zwischen wenigstens einem der Wellenteile (12, 13) und der Trägerplatte (18) ein elastisches Ausgleichselement (17) vorgesehen ist.

**5.** Elektrische Maschine (1) nach einem der vorstehenden Ansprüche, **dadurch gekennzeichnet, dass** zwischen dem Innenumfang der Magnetelement-Aufnahme und zumindest dem Außenumfang des wenigstens einen Magnetelements (5) ein elastisches Ausgleichselement (17) vorgesehen ist.

**6.** Elektrische Maschine (1) nach einem der vorstehenden Ansprüche, **dadurch gekennzeichnet, dass** das wenigstens eine Magnetelement (5) stabförmig, stangenförmig, hülsenförmig oder scheibenförmig und/oder die Trägerplatte (18) als Scheibe oder segmentierte Scheibe ausgebildet ist zur Aufnahme in der Magnetelement-Aufnahme.

**7.** Elektrische Maschine (1) nach einem der Ansprüche 2 bis 6, **dadurch gekennzeichnet, dass** die dem Ende der Trägerplatte (18) gegenüberliegende Seitenwand (33) der Aussparung (32) oder der dem Ende der Trägerplatte (18) gegenüberliegende Boden der Vertiefung gerade verläuft oder korrespondierend zu der Neigung des Endes der Trägerplatte (18) geneigt verläuft.

## Claims

**1.** Electrical machine (1) having:

a two-part shaft (6) with a first and a second shaft part (12, 13) between which a rotor (4) is arranged and is connected to the two shaft parts (12, 13), wherein the rotor (4) has a magnetic element receptacle (16) in which at least one magnetic element (5) is received, wherein a connecting rod (20)

- either is guided entirely through one shaft part (12) and the rotor (4) with its at least one magnetic element (5) and is partially inserted into the other shaft part (13) and fastened to it, in particular fastened in a positively locking and/or non-positively locking manner,
- or is guided entirely through both shaft parts (12, 13) and the rotor (4) with its at least one magnetic element (5) and the two shaft parts (12, 13) and the rotor (12) are clamped to one another in the axial direction, in particular by clamping elements (19),

wherein both ends of the magnetic element (5) are designed as outwardly protruding pointed or blunt ends which are received in corresponding receptacles (35) of the electrical machine (1), **characterized in that** the receptacles (35) for receiving the ends of the magnetic element (5) by way of its outwardly protruding pointed or blunt ends are designed as recesses in each case in a carrier plate (18) arranged between the respective shaft part (12, 13) and the at least one magnetic element (5), wherein the carrier plates (18) are not magnetic,

wherein the carrier plates (18) are each formed in an outwardly conically tapering manner on the side situated opposite the respective shaft part (12, 13) and the shaft parts (12, 13) each have a corresponding recess for receiving the respective carrier plate (18).

2. Electrical machine (1) according to Claim 1, **characterized in that** a sleeve (16) is provided, which has the magnetic element receptacle and is fastened to the two inner ends (14, 15) of the shaft parts (12, 13), wherein the sleeve (16), by way of its inner circumference, forms the magnetic element receptacle and can be formed with an additional cutout (32) on its inner circumference for receiving the at least one magnetic element (5) or an additional step (36) on the inner circumference as a stop for the at least one magnetic element (5).

3. Electrical machine (1) according to Claim 1 or 2, **characterized in that** the recess is designed as a conical, cone-like or truncated cone-like recess.

4. Electrical machine (1) according to one of Claims 1 to 3, **characterized in that** an elastic compensation element (17) is provided between at least one of the shaft parts (12, 13) and the carrier plate (18).

5. Electrical machine (1) according to one of the preceding claims, **characterized in that** an elastic compensation element (17) is provided between the inner circumference of the magnetic element receptacle and at least the outer circumference of the at least one magnetic element (5).

6. Electrical machine (1) according to one of the preceding claims, **characterized in that** the at least one magnetic element (5) is of bar-like, rod-like, sleeve-like or disc-like design and/or the carrier plate (18) is designed as a disc or segmented disc for being received in the magnetic element receptacle.

7. Electrical machine (1) according to one of Claims 2 to 6, **characterized in that** the side wall (33) of the cutout (32), which side wall is situated opposite the end of the carrier plate (18), or the base of the recess, which base is situated opposite the end of the carrier plate (18), runs in a straight line or runs in an inclined manner corresponding to the incline of the end of the carrier plate (18).

**Revendications**

1. Machine électrique (1) comprenant :

un arbre en deux parties (6) doté d'une première et d'une deuxième partie d'arbre (12, 13), entre lesquelles un rotor (4) est disposé et est relié aux deux parties d'arbre (12, 13), le rotor (4) comprenant un logement d'élément magnétique (16) dans lequel au moins un élément magnétique (5) est logé,

une tige de liaison (20) étant

- soit guidée complètement à travers une partie d'arbre (12) et le rotor (4) doté de son au moins un élément magnétique (5) et étant insérée partiellement dans l'autre partie d'arbre (13) et fixée à celle-ci, en particulier par complémentarité de formes et/ou à force,

- soit guidée complètement à travers les deux parties d'arbre (12, 13) et le rotor (4) doté de son au moins un élément magnétique (5) et les deux parties d'arbre (12, 13) et le rotor (4) étant serrés les uns avec les autres dans la direction axiale, en particulier par le biais d'éléments de serrage (19),

les deux extrémités de l'élément magnétique (5) étant réalisées sous forme d'extrémités pointues ou obtuses faisant saillie vers l'extérieur, lesquelles sont logées dans des logements (35), correspondant à celles-ci, de la machine électrique (1),

**caractérisée en ce que** les logements (35) pour le logement des extrémités de l'élément magnétique (5) par ses extrémités pointues ou obtuses faisant saillie vers l'extérieur sont réalisés sous forme d'évidements dans respectivement une plaque de support (18) disposée entre la partie d'arbre (12, 13) respective et l' au moins un élément magnétique (5), les plaques de support (18) n'étant pas magnétiques,

les plaques de support (18) étant réalisées de manière à se terminer de façon conique vers l'extérieur respectivement sur le côté opposé à la partie d'arbre (12, 13) respective et les parties d'arbre (12, 13) comprenant respectivement un évidement correspondant à celles-ci pour le logement de la plaque de support (18) respective.

2. Machine électrique (1) selon la revendication 1, **caractérisée en ce qu'**une douille (16) est prévue, laquelle comprend le logement d'élément magnétique, et est fixée aux deux extrémités intérieures (14, 15) des parties d'arbre (12, 13), la douille (16) formant, par sa périphérie intérieure, le logement d'élément magnétique et pouvant être réalisée avec une cavité supplémentaire (32) à sa périphérie intérieure pour le logement de l'au moins un élément magnétique (5) ou d'un gradin supplémentaire (36) à la périphérie intérieure comme butée pour l'au moins un élément magnétique (5).

3. Machine électrique (1) selon la revendication 1 ou 2, **caractérisée en ce que** l'évidement est réalisé sous la forme d'un évidement conique, en forme de cône ou en forme de tronc de cône.

4. Machine électrique (1) selon l'une des revendications 1 à 3, **caractérisée en ce qu'**un élément de compensation élastique (17) est prévu entre au moins l'une des parties d'arbre (12, 13) et la plaque de support (18) .

5. Machine électrique (1) selon l'une des revendications précédentes, **caractérisée en ce qu'**un élément de compensation élastique (17) est prévu entre la périphérie intérieure du logement d'élément magnétique et au moins la périphérie extérieure de l'au moins un élément magnétique (5).

6. Machine électrique (1) selon l'une des revendications précédentes, **caractérisée en ce que** l'au moins un élément magnétique (5) est réalisé en forme de barre, en forme de tige, en forme de douille ou en forme de disque et/ou la plaque de support (18) est réalisée sous forme de disque ou de disque segmenté pour le logement dans le logement d'élément magnétique.

7. Machine électrique (1) selon l'une des revendications 2 à 6, **caractérisée en ce que** la paroi latérale (33) de la cavité (32) opposée à l'extrémité de la plaque de support (18) ou le fond de l'évidement opposé à l'extrémité de la plaque de support (18) s'étend de manière rectiligne ou s'étend de manière inclinée de façon à correspondre à l'inclinaison de l'extrémité de la plaque de support (18).

Fig. 1

# Fig. 2

# Fig. 3

Fig. 4

## Fig. 5a

## Fig. 5b

# Fig. 6a

# Fig. 6b

# Fig. 7

S1  S2  S3  S4  S5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4433261 A
- WO 2010098046 A1